# EUROPÄISCHE PATENTSCHRIFT

(11) **EP 1 425 145 B1**
(45) Veröffentlichungstag und Bekanntmachung des Hinweises auf die Patenterteilung: **02.11.2006**
(21) Anmeldenummer: 02754101.0
(22) Anmeldetag: 02.09.2002
(51) Int. Cl.: B29B 7/40, B29B 7/74, B29B 7/90, C08J 3/215

(54) **VERFAHREN UND VORRICHTUNG ZUR HERSTELLUNG VON ELASTOMERMISCHUNGEN FÜR DIE GUMMIHERSTELLUNG**
METHOD AND APPARATUS FOR PRODUCING ELASTOMER MIXTURES FOR USE IN THE PRODUCTION OF RUBBERS
PROCEDE ET DISPOSITIF POUR LA PRODUCTION DES MELANGES ELASTOMERES POUR LA PRODUCTION DE CAOUTCHOUC

(30) Priorität: 14.09.2001 DE 10145392
(43) Veröffentlichungstag der Anmeldung: 09.06.2004
(73) Patentinhaber: Bühler AG, 9240 Uzwil (CH)
(72) Erfinder: INNEREBNER, Federico, CH-8049 Zürich (CH); KRUMPHOLZ, Erhard, CH-9244 Niederuzwil (CH); NÄF, Christoph, CH-8400 Winterthur (CH); STURM, Achim-Philipp, CH-9244 Niederuzwil (CH); STALDER, Bernhard, CH-9244 Niederuzwil (CH); HALTER, Roland, CH-9000 St. Gallen (CH)
(74) Vertreter: Frommhold, Joachim
(86) Internationale Anmeldenummer: PCT/CH2002/000477
(87) Internationale Veröffentlichungsnummer: WO 2003/024683

(56) Entgegenhaltungen:
- EP-A- 1 110 691
- GB-A- 806 362
- US-A- 3 178 390
- US-A- 5 597 235
- US-A- 5 711 904

## Beschreibung

Die Erfindung bezieht sich auf ein Verfahren und eine Vorrichtung gemäss dem Oberbegriff von Anspruch 1 bzw. 28 zur Herstellung von Elastomermischungen (Elastomercompounds) für die Herstellung von Gummiartikeln. Dabei wird mindestens ein zur Herstellung der Elastomermischung zu verarbeitendes Elastomer in einen Mischextruder eindosiert und während seines Durchtritts durch den Mischextruder gemischt und plastifiziert und/oder mastifiziert ("aufgeschmolzen"). Das Elastomer liegt beim Eindosieren in den Mischextruder in gleichmässig verteilter Form in einem ersten Fluidmedium vor. Die Verstärkungsstoffe, insbesondere Russe oder Silikate liegen als Suspension in einem zweiten Fluidmedium vor und werden dem in dem ersten flüssigen Medium dispergierten Elastomer zugeführt.

Elastomermischungen, die aus einer kontinuierlichen Elastomermatrix und einem in die Elastomermatrix eingearbeiteten Füllstoff bestehen, sind Ausgangsprodukte für die Gummiherstellung. Das unverarbeitete Elastomer kann z.B. Naturkautschuk oder synthetischer Kautschuk, wie z.B. Nitrylkautschuk sein. Als Füllstoff können z.B. Russpartikel oder Silikatpartikel verwendet werden. Es hat sich gezeigt, dass der Verteilungsgrad und Zerteilungsgrad (Dispersionsgrad) auf die gummitechnischen Eigenschaften einen beachtlichen Einfluss hat. Bei bekannten kontinuierlichen Verfahren zur Herstellung derartiger Elastomermischungen erfolgt dieses dispersive und distributive Mischen sowie das Plastifizieren und/oder Mastifizieren des Füllstoffes bzw. des Elastomers mit Hilfe von Innenmischem.

Um die Herstellung von Elastomermischungen für die Gummiindustrie zu vereinfachen, wurde versucht, die traditionellen Darbietungsformen des Natur- oder Synthesekautschuks, wie z.B. die Ballenform, durch flüssiges oder pulverförmiges Elastomer als Rohmaterial zu ersetzen. Zudem ist die partikulierte Darbietungsform die Voraussetzung für eine kontinuierliche Kautschukmischungsherstellung.

Die Verwendung flüssiger Elastomere wurde bisher nur ansatzweise entwickelt, da dies ein Umdenken und beträchtliche Investitionen seitens der Gummiindustrie erfordert. Elastomere in Pulverform scheinen sich jedoch als Ausgangsmaterial für die Herstellung von Elastomermischungen sowohl im diskontinuierlichen als auch im kontinuierlichen Verfahren zu bewähren. Dies wiederum machte es notwendig, Verfahren für die Herstellung von Pulverkautschuk bereit zustellen. So wurden Verfahren zum Sprühtrocknen und Gefriertrocknen von Nitrylkautschuk oder natürlichem Kautschuk entwickelt. Auch das Verfahren der Blitzverdampfung oder Mahlverfahren wurden verwendet, um kleinere Teilchen zu erzeugen. Ein Nachteil all dieser Verfahren besteht jedoch in der Klebrigkeit und der Kaltfliesseigenschaft der erzeugten Kautschukteilchen. Dennoch wurden Pulverprodukte hergestellt, indem man die Teilchen mit sehr feinen organischen und anorganischen Pulvern einstaubte, um die Kohäsionskräfte zu deaktivieren. Leider wurden durch diese Massnahmen immer wieder ungewollte Verunreinigungen in die hergestellten Teilchen eingetragen.

Folglich wurde ein Verfahren zur Herstellung von Kautschuk/Füllstoff-Mischungen in Pulverform entwickelt. Hierbei wird zuerst eine stabile Kautschuk/Wasser-Emulsion unabhängig von der Art und dem Zustand des Kautschuks gebildet (z.B. Lösungs- oder Emulsions-Polymerisate, Naturkautschuk oder Nitrylkautschuk). Dieser Emulsion wird Füllstoff (Russ oder Silikat) zugefügt, dessen Teilchengrössen-Verteilung zuvor genau eingestellt wurde und der sich zusammen mit verschiedenen Additiven in einer wässrigen Suspension befindet. Die Latex-Emulsion und die Füllstoff-Suspension werden in einem Mischbehälter durch intensives Rühren homögenisiert. Anschliessend wird der Fällungsvorgang bei ständigem Rühren in einem Reaktionsbehälter abgeschlossen, und das gewonnene Fällungsprodukt wird zur weiteren Verarbeitung in einen Homogenisierungsbehälter überführt. Ein Grossteil des Wassers wird dann in einer Zentrifuge entfernt, woraufhin die feinverteilte Mischung bis auf einen Restwassergehalt von weniger als 1 % getrocknet wird. Die so gewonnenen Kautschuk/Füllstoff-Mischungen in Pulverform sind nach dem Trocknen rieselfähig und eignen sich für die Herstellung von Gummiprodukten in einem kontinuierlichen Verfahren.

Zur Gummiherstellung bzw. zur Herstellung von Gummiartikeln werden dann die so gewonnen pulverförmigen Kautschuk/Füllstoff-Mischungen in einem Doppelwellenextruder zusammen mit Weichmachern und anderen Beimischungen plastifiziert und/oder mastifiziert ("aufgeschmolzen"), wodurch eine kontinuierliche flüssige Polymermatrix mit in ihr suspendierten Füllstoffteilchen entsteht. Durch Hinzugabe eines Vulkanisationsmittels werden zwischen den Elastomermolekülen zusätzliche Vernetzungen geschaffen, so dass die anschliessend abgekühlte "Masse" die gewollten gummielastischen Eigenschaften aufweist Je nach der Art des verwendeten Elastomers, der Art, der Grösse und dem Gehalt der Füllstoffteilchen lassen sich somit massgeschneiderte Gummimischungen herstellen. Hierfür benötigt man mindestens zwei unterschiedliche pulverförmige Kautschuk/Füllstoff-Mischungen, aus denen man wiederum durch deren geeignetes Mischungsverhältnis untereinander eine grosse Bandbreite von Gummimischungen gewinnen kann.

Ein derartiges Verfahren zur Herstellung pulverförmiger, frei fliessender KautschukFüllstoff-Mischungen (Kautschuk/Füllstoff-Batches) ist in der EP-1035155 A1 offenbart. Über eine Suspension mit dem entsprechenden Kautschuk und Russ wird durch Koagulation der Kautschuk und der Russ zu "Granulaten" (Pulverkautschuk) ausgefällt. Der Pulverkautschuk besitzt eine rundliche Form mit einem Durchmesser von 1 bis 3 mm, wobei der Russ das Polymer umgibt Der Russ liegt bereits in einer vorverteilten Form vor. Der Russ ermöglicht eine einfache Handhabung, insbesondere eine einfache Lagerung und Dosierung.

Grundsätzlich lassen sich mit diesem Verfahren alle wichtigen Kautschuke (natürliche oder künstliche) zu Granulat herstellen. Diverse Zuschlagsstoffe und Weichmacher können in das Granulat eingebaut werden, und vereinfachen dadurch das Zudosieren der Komponenten in das Mischaggregat.

Derartige Verfahren sind z.B. aus den Dokumenten US 3178390, EP 1 110 691, US 5597235 und US 5711904 bekannt.

Es hat sich jedoch auch gezeigt, dass die Gummiherstellung ausgehend von pulverförmigen Kautschuk/Füllstoff-Mischungen auch Nachteile besitzt. Betrachtet man nämlich die gesamte Energiebilanz ausgehend vom Naturkautschuk oder künstlichem Kautschuk bis zum Gummi-Endprodukt, so erkennt man, dass diese Art der Gummihersteliung energieintensiv ist. Da das Wasser schon bei der Herstellung des Pulverkautschuks (Kautschuk/Füllstoff-Gemisches) entfernt wird und anschliessend in einem Doppelwellenextruder dieser Pulverkautschuk zusammen mit Vulkanisationgmittel und anderen Beimischungen "aufgeschmolzen" wird, muss für das Aufschmelzen und Einarbeiten der Füllstoffe sehr viel Energie aufgebracht werden. Neben den hohen Energiekosten muss hierbei auch stets darauf geachtet werden, dass die Temperatur des Produktes im Extruder nicht über eine kritische Temperatur ansteigt, da sonst das Elastomer beschädigt werden kann. Die Elastomer-Polymerketten werden dabei durch die hohe Temperatur in kleinere Bruchstücke zerlegt bzw. chemisch modifiziert, und/oder weitere organische Bestandteile, insbesondere Weichmacher werden zersetzt, und/oder in Gegenwart von Vulkanisationsmittel kann eine verfrühte Vernetzung eingeleitet werden.

Eine gewisse Verbesserung hierfür liefert die GB 806362, bei der u.a. gelehrt wird, Russ entweder als Pulver in trockener Form oder als Suspension in einem flüssigen Medium in einen Mischer einzuleiten.

Ausgehend von diesen Unzulänglichkeiten des Stands der Technik stellt sich die vortiegende Erfindung die Aufgabe, ein Verfahren zur Herstellung von Elastomermischungen : für die Gummiherstellung bereit zustellen, bei dem die oben genannten Probleme des Stands der Technik beseitigt oder zumindest verringert werden.

Diese Aufgabe wird erfindungsgemäss dadurch gelöst, dass bei dem eingangs genannten Verfahren zur Herstellung von Elastomermischungen für die Gummiherstellung das Einarbeiten von Füllstoff in mehreren Einarbeitungsschritten während des Durchlaufs des Produktes durch den Mischextruder erfolgt und die Einarbeitungsschritte und die Entwässerungsschritte abwechselnd aufeinanderfolgen.

Erfindungsgemäss erfolgt die Entfernung des ersten und/oder des zweiten Fluidmediums in mehreren Entwässerungsschritten während des Durchlaufs des Produktes durch den Mischextruder, wobei insbesondere auch das Einarbeiten von Füllstoff in mehreren Einarbeitungsschritten während des Durchlaufs des Produktes durch den Mischextruder erfolgt.

Erfindungsgemäss wird auch darauf geachtet, dass die Einarbeitungsschritte und die Entwässerungsschritte abwechselnd aufeinanderfolgen, wobei vorzugsweise während eines Entwässerungsschrittes von dem ersten und/oder dem zweiten Fluidmedium jeweils nur so viel aus dem Produkt entfernt wird, dass für den jeweils nachfolgenden Einarbeitungsschritt eine optimale Einarbeitung gewährleistet wird.

Das Vorliegen des Elastomers in gleichmässig verteilter Form in einem ersten Fluidmedium bewirkt eine geringere Viskosität, solange noch ausreichend viel Fluidmedium in dem zu verarbeitenden Produkt enthalten ist und sorgt durch die Anwesenheit des Fluids, vorzugsweise Wasser, gleichzeitig für eine wesentlich bessere. Kühlung als bei dem "trockenen" Verfahren des Standes der Technik.

Je nach der Art des Elastomers (Naturkautschuk, Synthesekautschuk) etc. kann das erste Fluidmedium ein Lösungsmittel sein, in dem das Elastomer in gelöster Form vorliegt oder das Elastomer kann als Emulsion einer Elastomerlösung in einer mit dem Lösungsmittel nicht mischbaren Flüssigkeit vorliegen. Bei Bedarf kann das Elastomer auch als Suspension von Elastomerteilchen in einer Flüssigkeit oder als gelartiger Verbund in einem Lösungsmittel vorliegen.

Zweckmässigerweise verwendet man bei dem erfindungsgemässen Verfahren als Mischextruder einen dichtkämmenden, gleichsinnig drehenden Mehrwellenextruder, insbesondere einen Ringextruder. Vorteile des Ringextruders sind z.B. seine höhere Entgasungsleistung, sein engeres Verweilzeitspektrum, seine kürzere: Baulänge sowie sein höherer erzielbarer Dispergierungsgrad. Somit können dieselben Ergebnisse wie mit einem Doppelwellenextruder effizienter erzielt werden.

Bei einer bevorzugten Ausführung des erfindungsgemässen Verfahrens werden dem in dem ersten flüssigen Medium gleichmässig verteilten Elastomer vor dem Eindosieren in den Mischextruder Verstärkungsstoffe, insbesondere Russe oder Silikate zugeführt. Die Einarbeitung der für die Gummiherstellung notwendigen weiteren Komponenten erfolgt somit zu einem Zeitpunkt, bei dem das zu verarbeitende Produkt auf Grund des noch vorhandenen ersten Fluidmediums noch eine relativ geringe Viskosität hat Dies ermöglicht es auch, die notwendige Viskosität einzustellen, denn für die Zerteilung der Komponenten wird eine gewisse Scherenergie benötigt. Diese wird unter anderem durch die Viskosität beeinflusst. Die Idee besteht darin, eine möglichst geringe Viskosität einzustellen, die noch notwendig ist, damit genügend Scherenergie eingetragen wird. Somit kann man die geringe bzw. für die jeweilige Verfahrensstufe eingestellte Viskosität ausnutzen, um schon vor dem Entwässern und Entgasen eine ideale Verteilung und Zerteilung der Komponenten im Produkt zu erzielen.

Alternativ können die Verstärkungsstoffe, insbesondere die Russe oder die Silikate, auch durch direktes Eindosieren in den Mischextruder dem in dem ersten flüssigen Medium gleichmässig verteilten Elastomer zugeführt werden, wobei die dem Elastomer zugeführten Verstärkungsstoffe erfindungsgemäss als Suspension in einem zweiten Fluidmedium vorliegen. Dieses zweite Fluidmedium trägt dann ebenfalls zur Verringerung der Viskosität bzw. zu einer Kühlung des im Mischextruder zu verarbeitenden Produktes bei.

Zweckmässigerweise werden die dem Elastomer zugeführten Verstärkungsstoffe vor dem Eindosieren in den Mischextruder in einer Vorrichtung durch Nassvermahlung auf-; bereitet Auf diese Weise wird vermieden, dass die für die Verteilung und Zerteilung der Verstärkungsstoffe verwendete und zum Teil in Wärme umgewandelte Energie nicht unmittelbar dem Elastomer zugeführt wird, dieses also thermisch geschont wird.

Als Vorrichtung für die Nassvermahlung wird vorzugsweise eine Rührwerksmühle, insbesondere eine konische Rührwerksmühle, oder eine Zentrifugalmühle verwendet. Vorzugsweise sind sowohl die konische Rührwerkskugelmühle als auch die Zentrifugalmühle als Stiftmühlen ausgebildet, die bei Bedarf auch noch zusätzliche Kollisionskörper enthalten.

Zweckmässigerweise werden bei dem erfindungsgemässen Verfahrenen weitere Komponenten für die Elastomermischung zur Gummiherstellung mindestens teilweise in den Extruder eindosiert. Bei den weiteren Komponenten für die Elastomermischung handelt es sich z.B. um weitere Verstärkungsstoffe bzw. Füllstoffe, Additive, Vulkanisationsmittel, Beschleuniger, Weichmacher und Hilfsmittel.

Gemäss einer weiteren Ausführung wird dem Elastomer nur Füllstoff beigemischt, und man verzichtet auf das Eindosieren von Vernetzungsmitteln.

Zweckmässigerweise wird bei Zudosierung von Vulkanisationsmittel in das Produkt die Produkttemperatur im Mischextruder zumindest förderabseitig von der Zudosierungsstelle unterhalb der Vulkanisationstemperatur gehalten. Dadurch wird verhindert, dass eine Vulkanisation der Elastomermischung schon bei deren Mischungsherstellung erfolgt.

Während die Komponenten und die Verstärkungsstoffe im Mischextruder in das Elastomer eingearbeitet und/oder zerteilt und/oder verteilt werden, wird das Produkt im Mischextruder zweckmässigerweise nach und nach entgast.

Vorzugsweise wird dabei auch das erste und/oder das zweite Fluidmedium zumindest teilweise in mindestens einem Entwässerungsschritt aus dem Produkt während seines Durchlaufs durch den Mischextruder entfernt. Auf diese Weise wird zu Beginn des Mischvorgangs, wenn noch viele Komponenten in die Elastomermischung eingearbeitet werden müssen, für eine niedrige Viskosität gesorgt, während gegen Ende des Mischvorgangs auf Grund der Entwässerung und der Entgasung eine Zunahme der Viskosität erfolgt, die aber zu diesem Zeitpunkt akzeptabel ist.

Besonders vorteilhaft ist es, wenn die Entfernung des ersten und/oder des zweiten Fluidmediums durch Entgasen bzw. Entwässern vor dem Eindosieren des Vulkanisationsmittels erfolgt Oft beeinflusst die Gegenwart von Wasser die Reaktivität des Vulka-: nisationsmittels. Zudem muss am Ende die Mischung wasserfrei vorliegen. Für die Vulkanisation (die je nach der Formgebung eingeleitet wird) werden typischerweise Temperaturen deutlich über 100°C gefahren. Sollte noch Wasser vorhanden sein, führt dies zur Aufschäumung der Gummimasse.

Bei einer besonders vorteilhaften Ausgestaltung des erfindungsgemässen Verfahrens erfolgen der eine bzw. die mehreren Entwässerungsschritte an einer bzw. an mehreren seitlichen Öffnungen entlang der Produkt-Durchlaufrichtung entlang des Mischextruders, wobei an der mindestens einen seitlichen Öffnung des Mischextruders jeweils ein weiterer in diese Öffnung mündender und zu dieser Öffnung hin fördernder Seitenextruder angeordnet ist. Dieser Seitenextruder ermöglicht es freiwerdendem Wasser, aus dem Produkt entgegen der Förderrichtung des Seitenextruders zu entweichen, wo hingegen das Elastomermaterial durch den Seitenextruder im Mischextruder stets zurückgehalten wird.

Bei Bedarf kann dem Produkt bei den erfindungsgemässen Verfahren auch ein Koagulationsmittel zugeführt werden. Dies ist besonders zweckmässig, wenn das Produkt beim Austreten aus dem Mischextruder geformt wird, um z.B. anschliessend granuliert zu werden. Auf diese Weise erhält man ein unter geeigneten Bedingungen umformbares und noch nicht vulkanisiertes Ausgangsprodukt, das nach seiner Umformung in einem letzten Schritt vulkanisiert werden kann. Auf diese Weise kann eine seit vielen Jahren herbeigesehnte Analogie zwischen der Elastomerverarbeitung und der Thermoplastverarbeitung hergestellt werden.

Besonders vorteilhaft ist es, wenn für die Herstellung von Gummilangwaren das aus dem Mischextruder austretende Produkt entlang einer Vulkanisationsstecke derart temperiert wird, dass eine kontinuierliche Vernetzung der Polymere stattfindet. Für den speziellen Fall der Gummilangwaren, wie. z.B. Profile, verfügt man somit über einen vollständigen kontinuierlichen Prozess ausgehend von den Rohstoffen Latex und Füllstoff mit anfänglich viel Wasser bzw. Lösungsmittel bis zu dem fertig geformten, entwässerten und schliesslich vemetzten Gummilangwaren-Endprodukt.

Weitere Vorteile, Merkmale und Anwendungsmöglichkeiten der vorliegenden Erfindung ergeben sich aus der nun folgenden Beschreibung zweier bevorzugter Ausführungsbeispiele der Erfindung.
- Fig. 1: zeigt schematisch eine Vorrichtung zum Durchführen der vorliegenden Erfindung gemäss einem ersten Ausführungsbeispiel; und
- Fig. 2: zeigt schematisch eine Vorrichtung zum Durchführen der vorliegenden Erfindung gemäss einem zweiten Ausführungsbeispiel.

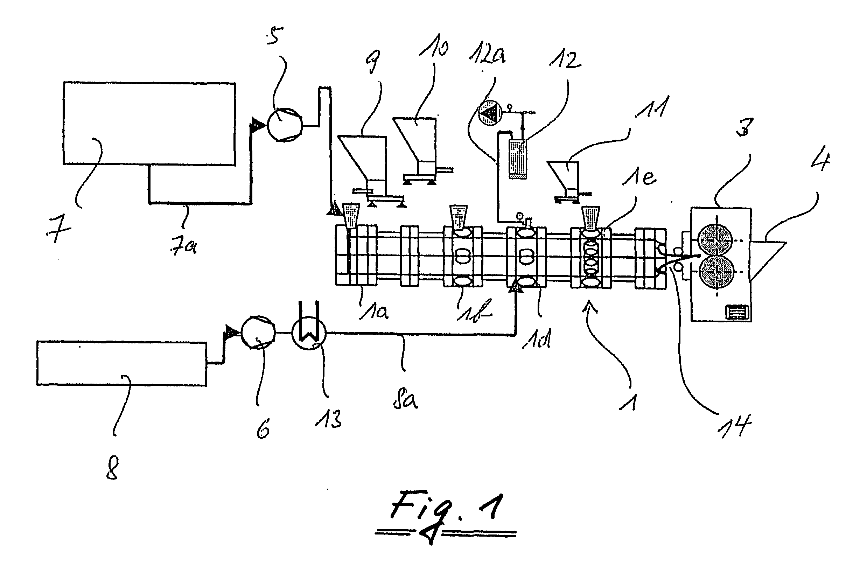

Fig. 1 zeigt eine Anlage zum Durchführen des erfindungsgemässen Verfahrens gemäss einem ersten Ausführungsbeispiel. Ein Mischextruder 1, bei dem es sich vorzugsweise um einen Mehrwellen-, insbesondere einen Ringextruder handelt, weist entlang seiner Produktdurchlaufrichtung mehrere Bereiche 1 a, 1 b, 1d und 1 e auf, die jeweils verschiedenen Verfahrenschritten entsprechen. Im Bereich 1a werden Verstärkungsstoffe eindosiert, im Bereich 1 b werden Additive und Hilfsmittel eindosiert, im Bereich 1 d findet eine Entgasung des Produktes statt, und im Bereich 1e wird Vulkanisationsmittel eindosiert. Eine Austragspumpe 3 und ein Formwerkzeug 4 sind dem Mischextruder nachgeschaltet. Ein Vorratsbehälter 7 für Latexemulsion oder Latexsuspension ist über eine Leitung 7a mit dem Bereich 1a des Mischextruders 1 verbunden, in dem sowohl Elastomer als auch Verstärkungsstoffe eindosiert werden. Die Eindosierung des Elastomers bzw. der Latexemulsion oder der Latexsuspension erfolgt über eine Dosierpumpe 5, während die Verstärkungsstoffe über eine Dosierwaage 9 dem Mischextruder 1 in seinem Bereich 1a zugeführt werden. Ähnlich wie die Verstärkungsstoffe werden weitere Hilfsmittel und Additive dem Mischextruder 1 in seinem Bereich 1 b mittels einer Dosierwaage 10 zugeführt. Ein Vorratsbehälter 8 für Weichmacher ist mit einer Leitung 8a mit dem Bereich 1d des Mischextruders 1 verbunden. Im Bereich 1d findet somit einerseits eine Entgasung des Produktes und andererseits die Zugabe von Weichmacher statt. Der Weichmacher wird aber vorzugsweise schon vorher eindosiert, z.B. im Bereich 1 b. Sobald nämlich das Fluidmedium entgast wird, steigt die Viskosität dramatisch und muss mit dem Weichmacher gesenkt werden. Der Verdampfungspunkt der Weichmacher liegt deutlich über 100°C. Der Weichmacher wird über eine Dosierpumpe 6 durch die Leitung 8a gepumpt, in der sich stromab von der Dosierpumpe 6 auch noch ein Wärmetauscher 13 befindet. Die im Bereich 1d auch stattfindende Entgasung erfolgt über eine Leitung 12a, die den Bereich 1d des Mischextruders 1 mit einer Vakuumkammer 12 verbindet. Im Bereich 1 e des Mischextruders 1 wird schliesslich Vulkanisationsmittel mittels einer Dosierwaage 11 eindosiert.

Ausgehend von der im Vorratsbehälter 7 gelagerten Latexemulsion bzw. Latexsuspension sowie den nach und nach in den Mischextruder 1 eindosierten Verstärkungsstoffen, Additiven, Hilfsmitteln, Weichmacher und letztendlich dem Vulkanisationsmittel erhält man am Ende des Extruders ein bahnartiges oder strangartiges Produkt, das aus einer kontinuierlichen Elastomermatrix besteht, in der die Verstärkungsstoffe gleichmässig verteilt eingearbeitet sind. Neben den Verstärkungsstoffen enthält dieses Produkt 14 auch noch gleichmässig verteiltes Vulkanisationsmittel.

Bei der Bearbeitung des Produktes während seines Durchlaufs durch den Mischextruder 1 muss stets darauf geachtet werden, dass die Temperatur des Produktes keine kritische Temperatur des Produktes übersteigt, ab der die Polymerketten des Elastomermaterials geschädigt und abgebaut werden. Nach der Eindosierung des Vulkanisationsmittels, das heisst hinter dem Bereich 1 e des Mischextruders 1, muss zusätzlich beachtet werden, dass man stets unter der Vulkanisationstemperatur für das betreffende Elastomer und Vulkanisationsmittel bleibt. Dadurch wird gewährleistet, dass das am Extruderende austretende bahnartige oder strangartige Produkt genügend lange Polymerketten aufweist, die jedoch durch das Vulkanisationsmittel noch nicht miteinander vemetzt sind. Dieses Ausgangsprodukt 14 für die Herstellung von Gummiartikeln kann bei Bedarf durch das Formwerkzeug 4 granuliert werden. Das so gewonnene granulierte Produkt 14 kann dann aufgeschmolzen und zu verschiedenen Gummiartikeln z.B. durch Spritzgiessen, Streckblasen oder kontinuierliches Profilformen und ähnliche Formgebungsverfahren zu Endprodukten aus Gummi weiter verarbeitet werden. Bei dieser letzten Weiterverarbeitung des Ausgangsproduktes 14 für die Gummiherstellung kann dann das Ausgangsprodukt 14 auf seine Vulkanisationstemperatur erhitzt werden, so dass die Vulkanisation nach der Formgebung stattfinden kann. Nach der Formgebung kann dann für die Herstellung von Gummilangwaren (Profile, etc.) über eine Vulkanisationsstrecke nach den verschiedenen bekannten Verfahren eine Kalibrierung und Vernetzung der Elastomere durchgeführt werden.

Die durch das erfindungsgemässe Verfahren gewonnene Elastomermischung 14 als Ausgangsprodukt für die Gummiherstellung bildet eine Grundlage, auf der man beliebige Gummiartikel ähnlich herstellen kann wie es schon heute bei der Verarbeitung von Thermoplasten üblich ist.

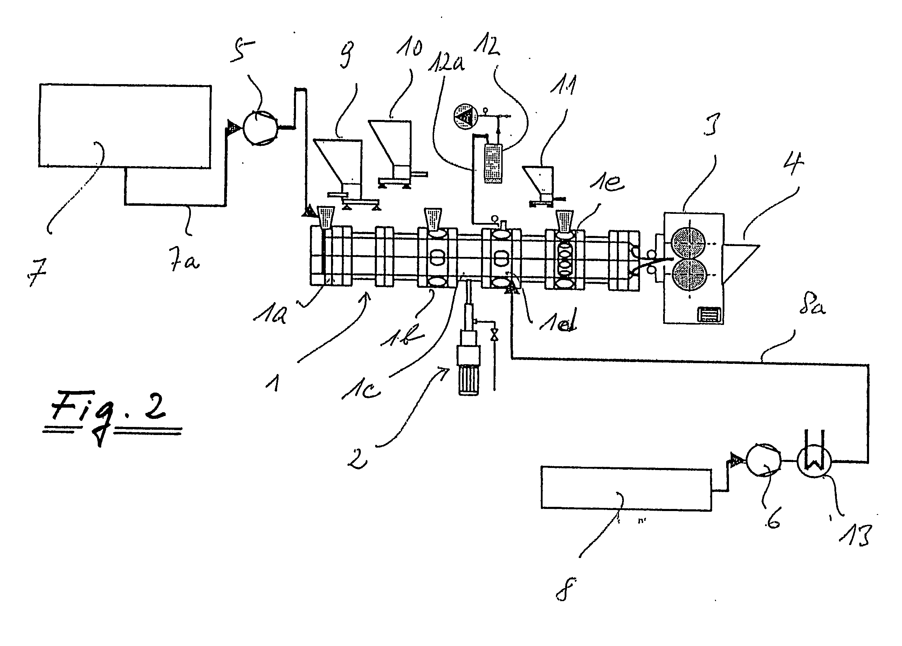

Ein besonderer Vorteil des erfindungsgemässen Verfahrens besteht darin, dass man während des Durchlaufs des Produktes durch den Mischextruder 1 das vorzugsweise stark wasserhaltige oder lösungsmittelhaltige Produkt nicht sofort, sondern erst nach und nach entwässert. Auf diese Weise hat das zu verarbeitende Produkt eine optimale Viskosität, wodurch die für die Verarbeitung des Produktes einzutragende mechanische Energie optimal gehalten werden kann, was wiederum zu einer weniger starken Aufwärmung des Produktes führt. Ausserdem wird durch die Anwesenheit grösserer Mengen Wasser oder Lösungsmittel in dem Produkt auf Grund der hohen Wärmekapazität des Wasser ebenfalls die Temperatur des zu verarbeitenden Produktes im Mischextruders 1 moderiert. Erfindungsgemäss sind die (nicht gezeigten) Entwässerungsbereiche des Mischextruders 1 über dessen gesamte Länge verteilt. Fig. 2 zeigt eine Anlage zur Durchführung des erfindungsgemässen Verfahrens gemäss einem zweiten Ausführungsbeispiel. Die Anlage von Fig. 2 unterscheidet sich von der Anlage der Fig. 1 dadurch, dass in dem Mischextruder 1 ein Bereich 1 c für die Entwässerung des im Mischextruder 1 zu verarbeitenden Produkts vorgesehen ist. Die Entwässerung im Bereich 1 c erfolgt mittels einer Entwässerungsvorrichtung. Die Entgasung kann übrigens auch mehrmals stattfinden.

Vorzugsweise findet vor dem Eindosieren der Verstärkungsstoffe über die Dosierwaage 9 eine Nassvermahlung der z.B. durch Russ oder Silikate gebildeten Verstärkungsstoffe statt. In diesem Fall muss der anstelle des abgebildeten Feststoffdosiergerätes eine Flüssigdosierwaage verwendet werden. Besonders vorteilhaft erweist sich dabei die Verwendung einer konischen Rührwerkskugelmühle oder Zentrifugalmühle (nicht gezeigt). Anstelle der in Fig. 2 gezeigten Entwässerungsvorrichtung 2 für die Produktentwässerung verwendet man vorzugsweise einen Seitenextruder (nicht gezeigt), der in den für die Entwässerung bestimmten Bereich 1c des Mischextruders 1 mündet und zu dem Mischextruder 1 hin fördert. Auf diese Weise wird Elastomermaterial, das ggf. in den Seitenextruder (nicht gezeigt) austritt, sofort in den Mischextruder 1 zurückgefördert, während zusammen mit dem Elastomermaterial in den Seitenextruder austretendes Wasser zwischen den Schneckenelementen des Seitenextruders und dem Gehäuse des Seitenextruders gegen die zum Mischextruders 1 gerichtete Förderrichtung des Seitenextruders hindurchtreten kann. Auf diese Weise wird eine saubere Abscheidung von Wasser im Bereich 1 c des Mischextruders 1 erzielt. Vorzugsweise sind sämtliche über die gesamte Länge des Mischextruders 1 verteilt angeordneten Entwässerungsbereiche mit einem derartigen Seitenextruder ausgestattet.

### Bezugszeichenliste

- 1: Mischextruder
- 2: Entwässerungsvorrichtung
- 3: Austragspumpe
- 4: Formwerkzeug
- 5: Dosierpumpe
- 6: Dosierpumpe
- 1a: Bereich zur Eindosierung von Verstärkungsstoff bzw. Füllstoff
- 1b: Bereich zur Eindosierung von Additiven, Hilfsmitteln
- 1c: Bereich zur Entwässerung
- 1d: Bereich zur Entgasung
- 1e: Bereich zur Eindosierung von Vulkanisationsmittel
- 7: Behälter für Latexsuspension
- 7a: Leitung für Latexsuspension
- 8: Behälter für Weichmacher
- 8a: Leitung für Weichmacher
- 9: Dosierwaage für Verstärkungsstoff/Füllstoff
- 10: Dosierwaage für Additiv/Hilfsmittel
- 11: Dosierwaage für Vulkanisationsmittel
- 12: Vakuumkammer
- 12a: Vakuumleitung
- 13: Wärmetauscher
- 14: bahnartiges/strangartiges Produkt

## Patentansprüche

1. Verfahren zur Herstellung von Elastomermischungen bzw. Elastomercompounds für die Gummiherstellung, bei dem mindestens ein zur Herstellung der Elastomermischung zu verarbeitendes Elastomer in einen Mischextruder eindosiert und während seines Durchtritts durch den Mischextruder gemischt und plastifiziert und/oder mastifiziert bzw. aufgeschmolzen wird, wobei das Elastomer beim Eindosieren in den Mischextruder in gleichmässig verteilter Form in einem ersten Fluidmedium vorliegt und wobei Verstärkungsstoffe, insbesondere Russe oder Silikate, die als Suspension in einem zweiten Fluidmedium vorliegen, durch Eindosieren in den Mischextruder dem in dem ersten flüssigen Medium dispergierten Elastomer zugeführt werden, **dadurch gekennzeichnet, dass** das Einarbeiten von Füllstoff in mehreren Einarbeitungsschritten während des Durchlaufs des Produktes durch den Mischextruder erfolgt und die Einarbeitungsschritte und die Entwässerungsschritte abwechselnd aufeinander folgen.

2. Verfahren nach Anspruch 1, **dadurch gekennzeichnet, dass** das erste Fluidmedium ein Lösungsmittel ist, in dem das Elastomer in gelöster Form vorliegt.

3. Verfahren nach Anspruch 2, **dadurch gekennzeichnet, dass** das Elastomer als Emulsion einer Elastomerlösung in einer mit dem Lösungsmittel nicht mischbaren Flüssigkeit vorliegt.

4. Verfahren nach Anspruch 1, **dadurch gekennzeichnet, dass** das Elastomer als Suspension von Elastomerteilchen in einer Flüssigkeit vorliegt.

5. Verfahren nach Anspruch 1, **dadurch gekennzeichnet, dass** das Elastomer als gelartiger Verbund in einem Lösungsmittel vorliegt.

6. Verfahren nach einem der vorhergehenden Ansprüche, **dadurch gekennzeichnet, dass** der Mischextruder ein dichtkämmender, gleichsinnig drehender Mehrwellenextruder ist.

7. Verfahren nach einem der vorhergehenden Ansprüche, **dadurch gekennzeichnet, dass** dem in dem ersten flüssigen Medium dispergierten Elastomer vor dem Eindosieren in den Mischextruder Verstärkungsstoffe, insbesondere Russe oder Silikate, zugeführt werden.

8. Verfahren nach Anspruch 9, **dadurch gekennzeichnet, dass** die dem Elastomer zugeführten Verstärkungsstoffe vor dem Eindosieren in den Mischextruder in einer Vorrichtung durch Nassvermahlung aufbereitet werden.

9. Verfahren nach Anspruch 8, **dadurch gekennzeichnet, dass** die Nassvermahlung der suspendierten Verstärkungsstoffe in einem Zwischenraum zwischen zwei koaxialen Drehelementen erfolgt, die relativ zueinander um ihre gemeinsame Achse gedreht werden und in dem Zwischenraum zwischen den koaxialen Drehelementen ein Scherfeld erzeugen.

10. Verfahren nach Anspruch 9, **dadurch gekennzeichnet, dass** die beiden koaxialen Drehelemente jeweils ein Zylinder und ein Konus sind oder jeweils ein Konus sind, dergestalt dass sich der Zwischenraum zwischen den koaxialen Drehelementen in der Produkt-Förderrichtung verjüngt oder erweitert.

11. Verfahren nach Anspruch 9 oder 10, **dadurch gekennzeichnet, dass** eines der Drehelemente ein Rotor und das andere ein Stator ist.

12. Verfahren nach einem der Ansprüche 9 bis 11, **dadurch gekennzeichnet, dass** sich von der Oberfläche des jeweiligen Drehelements stiftartige Erhebungen in den Zwischenraum erstrecken, die sich während der Drehung der Drehelemente aneinander vorbei bewegen und mit den suspendierten Partikeln der Verstärkungsstoffe kollidieren.

13. Verfahren nach einem der Ansprüche 9 bis 12, **dadurch gekennzeichnet, dass** sich in dem Zwischenraum Kollisionskörper befinden, die während der relativen Drehung der Drehelemente mit der Oberfläche und/oder den stiftartigen Erhebungen der Drehelemente sowie mit den suspendierten Partikeln der Verstärkungsstoffe kollidieren.

14. Verfahren nach einem der vorhergehenden Ansprüche, **dadurch gekennzeichnet, dass** weitere Komponenten für die Elastomermischung mindestens teilweise in den Extruder eindosiert werden.

15. Verfahren nach Anspruch 14, **dadurch gekennzeichnet, dass** die weiteren Komponenten aus der Füllstoffe, Additive, Vulkanisationsmittel, Beschleuniger, Weichmacher und Hilfsmittel aufweisenden Gruppe ausgewählt werden.

16. Verfahren nach Anspruch 14, **dadurch gekennzeichnet, dass** neben dem zu verarbeitenden Elastomer nur Füllstoff in den Mischextruder eindosiert wird.

17. Verfahren nach Anspruch 14, **dadurch gekennzeichnet, dass** in die Elastomermischung keine Vernetzungsmittel eindosiert werden.

18. Verfahren nach Anspruch 15, **dadurch gekennzeichnet, dass** bei Zudosierung von Vulkanisationsmittel in das Produkt die Produkttemperatur im Mischextruder zumindest förderabseitig von der Zudosierungsstelle unterhalb der Vulkanisationstemperatur gehalten wird.

19. Verfahren nach einem der Ansprüche 14 bis 18, **dadurch gekennzeichnet, dass** die Komponenten und die Verstärkungsstoffe im Mischextruder in das Elastomer eingearbeitet und/oder zerteilt und/oder verteilt werden.

20. Verfahren nach einem der vorhergehenden Ansprüche, **dadurch gekennzeichnet, dass** das Produkt im Mischextruder entgast wird.

21. Verfahren nach einem der vorhergehenden Ansprüche, **dadurch gekennzeichnet, dass** die Entfernung des ersten und/oder des zweiten Fluidmediums vor dem Eindosieren des Vulkanisationsmittels erfolgt.

22. Verfahren nach einem der vorhergehenden Ansprüche, **dadurch gekennzeichnet, dass** während eines Entwässerungsschrittes von dem ersten und/oder dem zweiten Fluidmedium nur so viel aus dem Produkt entfernt wird, dass für den jeweils nachfolgenden Einarbeitungsschritt eine optimale Einarbeitung erreicht wird.

23. Verfahren nach einem der Ansprüche 21 oder 22, **dadurch gekennzeichnet, dass** der eine bzw. die mehreren Entwässerungsschritte an einer bzw. mehreren seitlichen Öffnungen entlang der Produkt-Durchlaufrichtung entlang des Mischextruders erfolgen, wobei an der mindestens einen seitlichen Öffnung des Mischextruders jeweils ein weiterer in diese Öffnung mündender und zu dieser Öffnung hin fördernder Seitenextruder angeordnet ist.

24. Verfahren nach einem der vorhergehenden Ansprüche, **dadurch gekennzeichnet, dass** das Produkt mit einem Koagulationsmittel versetzt wird.

25. Verfahren nach einem der vorhergehenden Ansprüche, **dadurch gekennzeichnet, dass** das Produkt beim Austreten aus dem Mischextruder geformt wird.

26. Verfahren nach Anspruch 25, **dadurch gekennzeichnet, dass** das geformte Produkt granuliert wird.

27. Verfahren nach Anspruch 25, **dadurch gekennzeichnet, dass** das geformte Produkt entlang einer Vulkanisationsstrecke derart temperiert wird, dass eine kontinuierliche Vernetzung der Polymere stattfindet.

28. Vorrichtung zum Durchführen des Verfahrens gemäss einem der Ansprüche 1 bis 27, welche einen Mischextruder (1) mit mindestens einem Mischbereich aufweist, **dadurch gekennzeichnet, dass** Entwässerungsbereiche des Mischextruders (1) über dessen gesamte Länge verteilt sind, wobei entlang des Extruders abwechselnde Entwässerungsbereiche und Füllstoff-Einarbeitungsbereiche angeordnet sind.

29. Vorrichtung nach Anspruch 28, **dadurch gekennzeichnet, dass** der Mischextruder ein Mehrwellenextruder ist.

30. Vorrichtung nach Anspruch 29, **dadurch gekennzeichnet, dass** der Mehrwellenextruder ein Ringextruder ist.

## Claims

1. A method for manufacturing elastomer mixtures or elastomer compounds for rubber production, in which at least one elastomer to be processed for manufacturing the elastomer mixture is metered into a mixing extruder, and mixed and plasticized and/or masticated or melted while passing through the mixing extruder, wherein the elastomer is present in a uniformly distributed form in a first fluid medium while being metered into the mixing extruder, and wherein strengtheners, in particular carbon blacks or silicates, which are present as a suspension in a second fluid medium, are added to the elastomer dispersed in the first fluid medium via metering into the mixing extruder, **characterized in that** the filler is incorporated in several incorporation steps as the product passes through the mixing extruder, and that the incorporation steps and dewatering steps follow one after the other.

2. The method according to claim 1, **characterized in that** a first fluid medium is a solvent in which the elastomer is present in dissolved form.

3. The method according to claim 2, **characterized in that** the elastomer is present as an emulsion of an elastomer solution in a liquid that is immiscible with the solvent.

4. The method according to claim 1, **characterized in that** the elastomer is present as a suspension of elastomer particles in a liquid.

5. The method according to claim 1, **characterized in that** the elastomer is present as a gel-like compound in a solvent.

6. The method according to one of the preceding claims, **characterized in that** the mixing extruder is a tightly intermeshing, multi-screw extruder that rotates in the same direction.

7. The method according to one of the preceding claims, **characterized in that** strengtheners, in particular carbon black or silicates, are introduced into the elastomer dispersed in the first liquid medium prior to the step of metering into the mixing extruder.

8. The method according to claim 9, **characterized in that** the strengtheners introduced to the elastomer are prepared via wet milling in a device prior to the step of metering into the mixing extruder.

9. The method according to claim 8, **characterized in that** the suspended strengtheners are wet milled in an intermediate space between two coaxial rotating elements, which are rotated relative to each other around their shared axis, and generate a shearing field in the intermediate space between the coaxial rotating elements.

10. The method according to claim 9, **characterized in that** the two coaxial rotating elements each are a cylinder and a cone, or each are a cone, designed in such a way that the intermediate space between the coaxial rotating elements narrows or expands in the product conveying direction.

11. The method according to claim 9 or 10, **characterized in that** one of the rotating elements is a rotor, and the other a stator.

12. The method according to one of claims 9 to 11, **characterized in that** the surface of the respective rotating elements has projecting from it pin-like elevations that extend into the intermediate space, which move past one another while the rotating elements are turned, and collide with the suspended particles of the strengtheners.

13. The method according to one of claims 9 to 12, **characterized in that** collision bodies are located in the intermediate space, and collide with the surface and/or the pin-like elevations of the rotating elements, as well as with the suspended particles of the strengtheners, during the relative rotation of the rotating elements.

14. The method according to one of the preceding claims, **characterized in that** additional components for the elastomer mixture are metered at least partially into the extruder.

15. The method according to claim 14, **characterized in that** the additional components are selected from the group consisting of fillers, additives, vulcanizing agents, accelerators, softeners and aids.

16. The method according to claim 14, **characterized in that** only filler is metered into the mixing extruder besides the elastomer to be processed.

17. The method according to claim 14, **characterized in that** no crosslinking agents are metered into the elastomer mixture.

18. The method according to claim 15, **characterized in that** the product temperature in the mixing extruder is kept below the vulcanization temperature while metering the vulcanizing agent into the product, at least downstream from the metering site.

19. The method according to one of claims 14 to 18, **characterized in that** the components and the strengtheners in the mixing extruder are incorporated into the elastomer and/or separated and/or distributed.

20. The method according to one of the preceding claims, **characterized in that** the product in the mixing extruder is degassed.

21. The method according to one of the preceding claims, **characterized in that** the first and/or second fluid medium is removed before metering in the vulcanizing agent.

22. The method according to one of the preceding claims, **characterized in that** only as much of the first and/or second fluid medium as necessary to achieve an optimal incorporation for the respectively ensuing incorporation step is removed from the product during a dewatering step.

23. The method according to one of claims 21 or 22, **characterized in that** the one or more dewatering steps take place at one or more lateral openings along the direction of product passage along the mixing extruder, wherein another respective lateral extruder is arranged at the at least one lateral opening, emptying into this opening and conveying toward this opening.

24. The method according to one of the preceding claims, **characterized in that** the product is reacted with a coagulant.

25. The method according to one of the preceding claims, **characterized in that** the product is molded as it exits from the mixing extruder.

26. The method according to claim 25, **characterized in that** the molded product is granulated.

27. The method according to claim 25, **characterized in that** the molded product is heated along a vulcanization path in such a way that the polymers are continuously cross-linked.

28. A device for implementing the method according to one of claims 1 to 27, which has a mixing extruder (1) with at least one mixing area, **characterized in that** dewatering areas of the mixing extruder (1) are distributed over its entire length, wherein dewatering areas alternate with filler incorporation areas along the extruder.

29. The device according to claim 28, **characterized in that** the mixing extruder is a multi-screw extruder.

30. The device according to claim 29, **characterized in that** the multi-screw extruder is a ring extruder.

## Revendications

1. Procédé de fabrication de mélanges élastomères ou de compounds élastomères pour la fabrication de caoutchouc, dans lequel on dose au moins un élastomère devant être mis en oeuvre pour la fabrication du mélange élastomère dans une extrudeuse mélangeuse et pendant son passage à travers l'extrudeuse mélangeuse, il est mélangé et plastifié et/ou mastiqué ou fondu, lors du dosage dans l'extrudeuse mélangeuse, l'élastomère étant présent sous une forme répartie de façon homogène dans un premier milieu fluide et des renforçateurs, notamment du noir de carbone ou des silicates qui se présentent en suspension dans un second milieu fluide étant amenés dans le premier élastomère dispersé dans le premier milieu fluide, **caractérisé en ce que** l'incorporation d'une matière de charge en plusieurs étapes d'incorporation est assurée pendant le passage du produit dans l'extrudeuse mélangeuse et **en ce que** les étapes d'incorporation et les étapes de déshydratation se suivent en alternance.

2. Procédé selon la revendication 1, **caractérisé en ce que** le premier milieu fluide est un solvant, dans lequel l'élastomère se présente sous forme dissoute.

3. Procédé selon la revendication 2, **caractérisé en ce que** l'élastomère se présente sous la forme d'une émulsion d'une solution d'élastomère dans un liquide non miscible avec le solvant.

4. Procédé selon la revendication 1, **caractérisé en ce que** l'élastomère se présente sous la forme d'une suspension de particules d'élastomère dans un liquide.

5. Procédé selon la revendication 1, **caractérisé en ce que** l'élastomère se présente sous la forme d'un composé ayant la consistance d'un gel dans un solvant.

6. Procédé selon l'une quelconque des revendications précédentes, **caractérisé en ce que** l'extrudeuse mélangeuse est une extrudeuse à arbres multiples tournant dans le même sens, à engagement serré.

7. Procédé selon l'une quelconque des revendications précédentes, **caractérisé en ce qu'**avant le dosage dans l'extrudeuse mélangeuse, on amène à l'élastomère dispersé dans le premier milieu liquide des agents renforçateurs, notamment du noir de carbone ou des silicates.

8. Procédé selon la revendication 9, **caractérisé en ce que** les agents renforçateurs amenés à l'élastomère avant le dosage dans l'extrudeuse mélangeuse sont traités dans un dispositif par broyage humide.

9. Procédé selon la revendication 8, **caractérisé en ce que** le broyage humide des agents renforçateurs en suspension est effectué dans un espace intermédiaire entre deux éléments rotatifs coaxiaux, que l'on tourne autour de leur axe, l'un par rapport à l'autre et qui dans l'espace intermédiaire entre les deux éléments rotatifs coaxiaux créent un champ de cisaillement.

10. Procédé selon la revendication 9, **caractérisé en ce que** les deux éléments rotatifs coaxiaux sont respectivement un cylindre et un cône ou respectivement un cône de configuration telle, que l'espace intermédiaire se rétrécisse ou s'élargisse dans la direction de transport du produit entre les éléments rotatifs coaxiaux.

11. Procédé selon la revendication 9 ou 10, **caractérisé en ce que** l'un des éléments rotatifs est un rotor et l'autre un stator.

12. Procédé selon l'une quelconque des revendications 9 à 11, **caractérisé en ce que** des élévations du type de tiges qui pendant la rotation des éléments rotatifs se déplacent en passant les uns devant les autres et qui entrent en collision avec les particules en suspension des agents renforçateurs s'étendent dans l'espace intermédiaire.

13. Procédé selon l'une quelconque des revendications 9 à 12, **caractérisé en ce que** des corps de collision, qui pendant la rotation relative des éléments rotatifs entrent en collision avec la surface et/ou avec les élévations du type de tiges des éléments rotatifs, ainsi qu'avec les particules en suspension des agents renforçateurs se trouvent dans l'espace intermédiaire.

14. Procédé selon l'une quelconque des revendications précédentes, **caractérisé en ce qu'**on ajoute par dosage dans l'extrudeuse d'autres composants pour le mélange élastomère.

15. Procédé selon la revendication 14, **caractérisé en ce qu'**on choisit les autres composants dans le groupe contenant les matières de remplissage, les additifs, les agents de vulcanisation, les accélérateurs, les plastifiants et les adjuvants.

16. Procédé selon la revendication 14, **caractérisé en ce que** hormis l'élastomère à mettre en oeuvre, on n'ajoute par dosage que de la matière de remplissage dans l'extrudeuse mélangeuse.

17. Procédé selon la revendication 14, **caractérisé en ce qu'**on ne rajoute par dosage aucun agent réticulant dans le mélange élastomère.

18. Procédé selon la revendication 15, **caractérisé en ce que** lors du dosage d'agent de vulcanisation dans la produit, au moins en aval de la direction de transport à partir du point de dosage, on maintient la température du produit dans l'extrudeuse mélangeuse sous la température de vulcanisation.

19. Procédé selon l'une quelconque des revendications 14 à 18, **caractérisé en ce qu'**on incorpore et/ou on sépare et/ou on répartit les composants et les agents renforçateurs dans l'élastomère dans l'extrudeuse mélangeuse.

20. Procédé selon l'une quelconque des revendications précédentes, **caractérisé en ce qu'**on dégaze le produit dans l'extrudeuse mélangeuse.

21. Procédé selon l'une quelconque des revendications précédentes, **caractérisé en ce qu'**on retire le premier et/ou le deuxième milieu fluide avant le dosage de l'agent de vulcanisation.

22. Procédé selon l'une quelconque des revendications précédentes, **caractérisé en ce que** pendant une étape de déshydratation du premier et/ou du deuxième milieu fluide, on ne retire du produit qu'une quantité propre à obtenir une incorporation optimale pour l'étape d'incorporation respectivement consécutive.

23. Procédé selon l'une quelconque des revendications 21 ou 22, **caractérisé en ce que** l'étape ou les plusieurs étapes de déshydratation sont effectuées sur une ou sur plusieurs ouvertures latérales, le long de la direction de passage du produit, le long de l'extrudeuse mélangeuse, une extrudeuse latérale supplémentaire débouchant dans ladite ouverture et transportant vers ladite ouverture étant disposée sur la au moins une ouverture latérale de l'extrudeuse mélangeuse.

24. Procédé selon l'une quelconque des revendications précédentes, **caractérisé en ce qu'**on mélange le produit à un agent coagulant.

25. Procédé selon l'une quelconque des revendications précédentes, **caractérisé en ce qu'**on moule produit à la sortie de l'extrudeuse mélangeuse.

26. Procédé selon la revendication 25, **caractérisé en ce qu'**on granule le produit.

27. Procédé selon la revendication 25, **caractérisé en ce qu'**on tempère le produit moulé le long d'un trajet de vulcanisation, de façon assurer une réticulation continue des polymères.

28. Dispositif pour la réalisation du procédé selon l'une quelconque des revendications 1 à 27, comportant une extrudeuse mélangeuse (1) avec au moins une zone de mélange, **caractérisé en ce que** des zones de déshydratation de l'extrudeuse mélangeuse (1) sont distribuées sur toute la longueur de cette dernière, des zones de déshydratation et des zones d'incorporation de matière de remplissage étant disposées le long de l'extrudeuse.

29. Dispositif selon la revendication 28, **caractérisé en ce que** l'extrudeuse mélangeuse est une extrudeuse à arbres multiples.

30. Dispositif selon la revendication 29, **caractérisé en ce que** l'extrudeuse à arbres multiples est une extrudeuse circulaire.
